# EUROPÄISCHE PATENTSCHRIFT

(11) **EP 3 350 851 B1**
(45) Veröffentlichungstag und Bekanntmachung des Hinweises auf die Patenterteilung: **27.11.2024**
(21) Anmeldenummer: 16725874.8
(22) Anmeldetag: 31.05.2016
(51) Int. Cl.: H01M 50/209, B60L 50/60, H01M 50/24, H01M 50/262, H01M 50/271, H01M 50/287, H01M 50/296, H01M 50/503, B60L 50/64

(54) **BATTERIEMODUL, VERFAHREN ZU DESSEN HERSTELLUNG SOWIE BATTERIE**
BATTERY MODULE, METHOD FOR THE PRODUCTION THEREOF AND BATTERY
MODULE DE BATTERIE, SON PROCÉDÉ DE FABRICATION AINSI QUE BATTERIE

(30) Priorität: 15.09.2015 DE 102015217644
(43) Veröffentlichungstag der Anmeldung: 25.07.2018
(73) Patentinhaber: Robert Bosch GmbH, 70442 Stuttgart (DE)
(72) Erfinder: GRUN, Stefan, 73230 Kirchheim Teck (DE); JASCH, Walter, 70174 Stuttgart (DE); JUNG, Ruben, 70374 Stuttgart (DE); BADER, Maximilian Oscar, 80337 Muenchen (DE); USSELMANN, Alexander, 69126 Heidelberg (DE); KOCH, Kerstin, 71701 Schwieberdingen (DE)
(86) Internationale Anmeldenummer: PCT/EP2016/062296
(87) Internationale Veröffentlichungsnummer: WO 2017/045781

(56) Entgegenhaltungen:
- WO-A1-2013/168989
- WO-A1-2013/168989
- DE-A1- 102011 003 964
- DE-A1- 102012 203 289
- DE-A1- 102013 207 357
- DE-A1- 102013 207 357
- DE-A1- 102013 213 848
- US-A- 4 603 093
- US-A- 4 603 093

## Beschreibung

### Stand der Technik

Die Erfindung geht aus von einem Batteriemodul nach Gattung des unabhängigen Anspruchs. Des Weiteren betrifft die Erfindung ein Verfahren zur Herstellung eines solchen Batteriemoduls und eine Batterie.

Aus dem Stand der Technik ist bekannt, dass Batterien, wie insbesondere Lithium-Ionen-Batterien, wenigstens aus einem Batteriemodul oder vorteilhaft auch aus einer Mehrzahl an Batteriemodulen bestehen. Weiterhin weist ein Batteriemodul bevorzugt eine Vielzahl an einzelnen Batteriezellen auf, welche untereinander zu dem Batteriemodul verschaltet sind, wobei die einzelnen Batteriezellen seriell oder parallel miteinander verschaltet sein können.

Stand der Technik sind bspw. DE 10 2013 207 357 A1, welche ein Zellkontakierungssystem offenbaren, oder DE 10 2013 213 848 A1, welche ein Batteriemodul mit einer Anzahl elektrisch miteinander verschalteter Batteriezellen, offenbart.

### Offenbarung der Erfindung

Ein Batteriemodul mit den Merkmalen des unabhängigen Anspruchs hat den Vorteil, dass zumindest ein elektrisches oder elektronisches Element während des Betriebs des Batteriemoduls vor äußeren Einflüssen geschützt ist. Insbesondere kann eine Anhaftung von Partikeln an dem zumindest einen elektrischen oder elektronischen Element reduziert werden. Zudem können insbesondere Beschädigungen durch eine mechanische Belastung verringert werden. Dadurch kann somit die Lebensdauer des zumindest einen elektrischen und elektronischen Elements verlängert werden und damit verbunden auch die Lebensdauer des Batteriemoduls. Desweiteren sind das zumindest eine elektrische Bauteil oder das zumindest eine elektronische Bauteil nach der Montage derart in dem Batteriemodul angeordnet, dass die Schwerkraft zusätzlich die Anlagerung von Partikeln erschwert.

Dazu wird ein Batteriemodul zur Verfügung gestellt. Das Batteriemodul umfasst dabei ein Batteriemodulgehäuse, welches zur Aufnahme einer Mehrzahl von Batteriezellen eingerichtet ist. Weiterhin umfasst das Batteriemodul ein Deckelelement, welches eine Gehäusewand mit einer ersten Oberfläche und einer zweiten Oberfläche aufweist. Die zweite Oberfläche ist an einer der ersten Oberfläche gegenüberliegenden Seite der Gehäusewand angeordnet. Weiterhin ist das Deckelelement des Batteriemodulgehäuses in der Art ausgebildet ist, dass in einem montierten Zustand die erste Oberfläche benachbart zu einer Umgebung des Batteriemodulgehäuses angeordnet ist und die zweite Oberfläche benachbart zu den Batteriezellen des Batteriemoduls angeordnet ist. Dabei kann zumindest ein elektrisches oder elektronisches Element mit der zweiten Oberfläche verbunden sein. Ferner kann zumindest ein elektrisches oder elektronisches Element derart in die Gehäusewand des Deckelelements integriert sein, dass deren elektrische oder elektronische Komponenten an der zweiten Oberfläche angeordnet sind.

Das zumindest eine elektrische Element umfasst dabei einen Zellverbinder und das zumindest eine elektronische Element umfasst dabei eine Leiterplatte, welche mittels eines Zellkontaktierungssystems miteinander verbunden sind. Die Gehäusewand bedeckt in jenen Bereichen der ersten Oberfläche, welche den von dem zumindest einen elektrischen oder elektronischen Element bedeckten Bereichen der zweiten Oberfläche gegenüberliegend angeordnet sind, das zumindest eine elektrische oder elektronische Element zur Umgebung hin.

Durch die in den abhängigen Ansprüchen aufgeführten Maßnahmen sind vorteilhafte Weiterbildungen und Verbesserungen der in den unabhängigen Ansprüchen angegebenen Vorrichtung oder des im unabhängigen Anspruch angegeben Verfahrens möglich.

Insbesondere kann durch die Verbindung des zumindest einen elektrischen Elements oder des zumindest einen elektronischen Elements mit dem Deckelelement oder deren Integration in das Deckelelement auf ein zusätzliches Deckelelement verzichtet werden. Weiterhin können dadurch die Größe und somit die Kosten des Deckelelements reduziert werden.

Bevorzugt kann das zumindest eine elektrische Element weiterhin eine Stromsammelschiene umfassen. Unter einem elektrischen Element soll dabei ein Element verstanden sein, welches den elektrischen Strom leitet und dabei einen definierten Widerstand aufweist. Dadurch ist es möglich, das zumindest eine elektrische Element eines Batteriemoduls durch eine Verbindung mit der zweiten Oberfläche des Deckelements des Batteriemodulgehäuses oder eine Integration in das Deckelelement, so dass die elektrischen Komponenten an der zweiten Oberfläche angeordnet sind, vor äußeren Einflüssen, wie beispielsweise dem Eintrag und der Anhaftung von Partikeln, zu schützen. Desweitern kann die Gehäusewand für eine elektrische Isolation des zumindest einen elektrischen Elements gegenüber der Umgebung sorgen und damit die Sicherheit erhöhen.

Bevorzugt kann das zumindest eine elektronische Element weiterhin ein Relais und eine Sicherung umfassen. Unter einem elektronischen Element soll dabei ein Element verstanden sein, welches durch eine aktive Beeinflussung des elektrischen Stromflusses das Batteriemodul regeln und/oder überwachen kann. Insbesondere bei den Komponenten der Leiterplatte führt eine Anhaftung von Partikeln zu einer Verringerung der Lebensdauer bzw. einer Reduktion der Leistungsfähigkeit. Somit kann durch eine Verbindung des zumindest einen elektronischen Elements mit der zweiten Oberfläche des Deckelelements des Batteriemodulgehäuses oder auch einer Integration in das Deckelelement, so dass die elektronischen Komponenten an der zweiten Oberfläche angeordnet sind, die Wahrscheinlichkeit einer Anhaftung von Partikeln reduziert werden. Dadurch kann unter Umständen auf weitere Maßnahmen zum Schutz der elektronischen Komponenten vor einer Anhaftung von Partikeln verzichtet werden. Weiterhin schützt die Gehäusewand das zumindest eine elektronische Element zudem vor mechanischen Einflüssen.

Es ist zweckmäßig, wenn das Deckelelement zumindest einen an der ersten Oberfläche angeordneten Spannungsabgriff aufweist. Insbesondere weist das Deckelelement einen positiven Spannungsabgriff und einen negativen Spannungsabgriff auf. Dabei ist das Deckelelement bevorzugt in der Art ausgebildet, dass die gesamte von den Batteriezellen des Batteriemoduls gelieferte Spannung an dem positiven Spannungsabgriff und dem negativen Spannungsabgriff abgegriffen werden kann. Dazu sind die Spannungsabgriffe der einzelnen Batteriezellen vorteilhaft über Zellverbinder und/oder Stromschienen miteinander und mit dem zumindest einen Spannungsabgriff, welcher an der ersten Oberfläche angeordnet ist, verbunden. Die Batteriezellen können dabei seriell oder parallel verschaltet sein. Weiterhin ist es möglich, die serielle Verschaltung und die parallele Verschaltung zu kombinieren.

Gemäß einem Aspekt der Erfindung kann vorgesehen sein, dass die Gehäusewand zumindest eine Öffnung aufweist. Die zumindest eine Öffnung ist zur Aufnahme eines Spannungsabgriffs einer Batteriezelle des Batteriemoduls eingerichtet. Dabei ist die zumindest eine Öffnung auf Seiten der ersten Oberfläche durch ein Abdeckelement verschließbar. Dies hat den Vorteil, dass das Deckelelement mit dem Gehäuse des Batteriemoduls verbunden werden kann und die Spannungsabgriffe der Batteriezellen von der Umgebung des Batteriemoduls dennoch zugänglich sind. Dadurch ist es möglich, einen Spannungsabgriff zuverlässig mit einem Zellverbinder zu verbinden. Dadurch ist eine direkte Kontaktierung des Zellverbinders mit dem Spannungsabgriff der Batteriezelle möglich, nachdem das Deckelelement mit dem Batteriemodul verbunden wurde. Insbesondere ist der Zellverbinder dazu wie bereits oben beschrieben mit dem Deckelelement verbunden oder in dieses integriert, wobei der Zellverbinder weiterhin einen nicht mit dem Deckelelement verbundenen oder in dieses integrierten Verbindungsbereich aufweist, welcher zur Anbindung an einen Spannungsabgriff eingerichtet ist. Der Spannungsabgriff und der Verbindungsbereich des Zellverbinders können dann, beispielsweise durch Laserschweißen, miteinander verbunden werden. Es ist dabei zweckmäßig, wenn der Verbindungsbereich des Zellverbinders innerhalb der zumindest einen Öffnung oder im Bereich der zumindest einen Öffnung auf Seiten der zweiten Oberfläche angeordnet ist, so dass eine einfache Verbindung ermöglicht wird. Nachdem der Spannungsabgriff und der Zellverbinder miteinander verbunden sind, kann die zumindest eine Öffnung, in welcher nun der an den Zellverbinder angebundene Spannungsabgriff angeordnet ist, durch ein Abdeckelement verschlossen werden. Somit kann der Spannungsabgriff der Batteriezelle vor äußeren Einflüssen, wie mechanischen Belastungen und Schmutz- bzw. Partikeleintrag geschützt werden. Insbesondere ist dadurch auch die Verbindung zwischen dem Zellverbinder und dem Spannungsabgriff der Batteriezelle vor äußeren Einflüssen geschützt. Vorteilhafterweise ist das Abdeckelement aus einem elektrisch isolierenden Werkstoff ausgebildet oder weist einen elektrisch isolierenden Werkstoff auf. Dadurch kann das Abdeckelement den Spannungsabgriff zur Umgebung des Batteriemoduls isolieren und dadurch die Sicherheit erhöhen.

Es ist vorteilhaft, wenn das Deckelelement eine umlaufend an dem Deckelelement angeordnete Dichtung aufweist. Dabei ist das Deckelelement in der Art reversibel oder irreversibel mit dem Batteriemodul verbindbar, dass in einem montierten Zustand die Dichtung einen die Batteriezellen aufnehmenden Innenraum gegenüber der Umgebung des Batteriemoduls abdichtet. Unter einer irreversiblen Verbindung ist in diesem Zusammenhang zu verstehen, dass das Deckelelement und das Gehäuse des Batteriemoduls durch stoffschlüssige Fügeverfahren wie Schweißen, Löten oder Kleben miteinander verbunden werden. Unter einer reversiblen Verbindung ist in diesem Zusammenhang zu verstehen, dass das Deckelelement und das Gehäuse des Batteriemoduls durch wieder lösbare Verbindung wie Schrauben oder Anklipsen miteinander verbunden werden. Dabei kann das Anklipsen derart ausgeführt sein, dass bei einem Öffnen die Klipse abbrechen und dadurch beispielsweise ein mutwilliges Öffnen nachgewiesen werden kann.

Es ist zweckmäßig, wenn mit der zweiten Oberfläche weiterhin ein Positionierelement verbunden ist, welches zur Befestigung des zumindest einen elektrischen Elements oder des zumindest einen elektronischen Elements an der zweiten Oberfläche ausgebildet ist. Dabei ist das Positionierelement in der Art ausgebildet, dass die Befestigung durch Umschmelzung des Materials des Positionierelements erfolgt. Dadurch kann das elektrische Element bzw. das elektronische Element auf einfache Weise mit der zweiten Oberfläche verbunden werden, insbesondere auch vor der Verbindung des Deckelelements mit dem Batteriemodulgehäuse. Unter Umschmelzung soll hier verstanden sein, dass das Positionierelement auf eine Temperatur erwärmt wird, die über der Schmelztemperatur des Materials des Positionierelements liegt, wodurch die Form des Positionierelements verändert werden kann.

Des Weiteren ist es auch zweckmäßig, wenn das Deckelelement zumindest ein zur Befestigung des Deckelelements an dem Batteriemodulgehäuse eingerichtetes Befestigungsmittel aufweist. Das Befestigungsmittel ist dabei mit dem Batteriemodulgehäuse verbindbar. Das Befestigungsmittel kann insbesondere eine Öffnung, ein Vorsprung oder ein Rastelement sein. Dadurch kann auf einfache Weise eine Verbindung zwischen dem Deckelelement und dem Batteriemodulgehäuse hergestellt werden. Insbesondere kann dabei auf aufwändige Fertigungsverfahren zur stoffschlüssigen Verbindung, wie beispielsweise Schweißen, verzichtet werden

Mit einer erfindungsgemäßen Ausführungsform eines Batteriemoduls kann dessen Herstellung vereinfacht werden. Insbesondere wird die Herstellung der seriellen und/oder parallelen Verschaltung der Batteriezellen sowie deren Kontaktierung durch eine Leiterplatte während der Montage vereinfacht, da elektronische Elemente bereits in das Deckelelement integriert werden können. Desweiteren ist es möglich, die zur Steuerung und/oder Regelung eines Batteriemoduls sowie zur Verschaltung der Batteriezellen benötigten elektrischen und/oder elektronischen Elemente bereits vor der Montage des Batteriemoduls mit dem Deckelelement zu verbinden bzw. in dieses zu integrieren und zu verschalten. Dadurch kann der Montageaufwand im Vergleich zu einer herkömmlichen Montage, also einer Verschaltung mit bereits in dem Gehäuse angeordneten Batteriezellen, reduziert werden, weil das Deckelelement noch nicht montiert ist und dadurch einfach für Montageschritte zugänglich ist.

Weiterhin vereinfacht das reduzierte Gewicht des Deckelelements die Handhabung während der Fertigung.

Weiterhin kann der einzige Montageschritt nach der Anordnung des Deckelements nur noch die Verbindung der Spannungsabgriffe der Batteriezellen mit den Zellverbindern sowie die Abdeckung der Öffnungen mit einem Abdeckelement beinhalten.

Ferner betrifft die Erfindung ein Verfahren zur Herstellung eines Batteriemoduls. Dazu werden in einem ersten Schritt die Batteriezellen in einem Gehäuse angeordnet und in einem zweiten Schritt wird das Gehäuse derart mit dem Deckelelement verschlossen, dass die Batteriezellen elektrisch seriell oder parallel miteinander verschaltet sind. Insbesondere kann dabei das Deckelelement weiterhin eine zur Aufnahme eines Spannungsabgriffes einer Batteriezelle ausgebildete Öffnung aufweisen. In diesem Fall beinhaltet der zweite Schritt weiterhin die Aufnahme des Spannungsabgriffes der Batteriezelle des Batteriemoduls in der zumindest einen Öffnung und die Verbindung des Spannungsabgriffs mit einem Zellverbinder.

Von Vorteil ist es, wenn vor dem zweiten Schritt weiterhin das zumindest eine elektrische Element oder das zumindest eine elektronische Element an der zweiten Oberfläche des Deckelelements befestigt wird. Zur Befestigung des zumindest einen elektrischen Elements oder des zumindest einen elektronischen Elements an der zweiten Oberfläche wird das Positionierelement umgeschmolzen, also auf eine Temperatur erwärmt, welche über der Schmelztemperatur des Materials des Positionierelements liegt. Das elektrische Element bzw. das elektronische Element weist zumindest eine Öffnung auf und nach dem Umschmelzen, also in einem Zustand, in welchem das elektrische Element bzw. das elektronische Element an der zweiten Oberfläche befestigt ist, weist das Positionierelement einen ersten Abschnitt und einen zweiten Abschnitt auf. Der erste Abschnitt des Positionierelements ist dabei in der Öffnung verlaufend angeordnet und mit der zweiten Oberfläche des Deckelelements verbunden. Der zweite Abschnitt des Positionierelements ist außerhalb der Öffnung angeordnet und kontaktiert zumindest teilweise eine Oberfläche des elektrischen Elements bzw. des elektronischen Elements.

Dadurch ist das elektrische Element bzw. das elektronische Element an der zweiten Oberfläche des Deckelelements befestigt.

Weiterhin von Vorteil ist es auch, wenn in dem zweiten Schritt weiterhin das Befestigungsmittel des Deckelelements mit dem Batteriemodulgehäuse verbunden wird, wobei die Verbindung ausgebildet wird.

Ein erfindungsgemäßes Batteriemodul ist für Batterien im mobilen Einsatz, insbesondere in Elektrofahrzeugen und E-Bikes, verwendbar und für Batterien für die Anwendung im stationären Betrieb.

### Kurze Beschreibung der Zeichnungen

Ausführungsbeispiele der Erfindung sind in den Zeichnungen dargestellt und in der nachfolgenden Beschreibung näher erläutert.

### Es zeigt

Figur 1 eine schematische Darstellung eines erfindungsgemäßen Batteriemod u ls,
Figur 2 eine Ausführungsform eines Deckelelements in einer perspektivischen Draufsicht,
Figur 3 eine Ausführungsform eines Deckelelements mit einem Abdeckelement in einer perspektivischen Draufsicht,
Figur 4 eine Ausführungsform eines Deckelelements in einer perspektivischen Ansicht von unten,
Figur 5 einen Ausschnitt eines Deckelelements mit einer Öffnung in einer perspektivischen Ansicht von unten,
Figur 6 eine weitere Ausführungsform eines Deckelelements mit Positionierelementen in einer perspektivischen Ansicht von unten,
Figuren 7a bis 7c eine Möglichkeit der Befestigung eines elektrischen Elements oder eines elektronischen Elements an dem Deckelement durch Umschmelzung eines Positionierelements,
Figur 8 eine Ausführungsform eines Deckelelements mit Befestigungsmitteln in einer perspektivischen Draufsicht,
Figur 9 eine Ausführungsform eines Batteriemodulgehäuses mit Befestigungsmittel in einer perspektivischen Draufsicht,
Figur 10 eine Ausführungsform eines Batteriemodulgehäuses mit weiteren Befestigungsmitteln in einer perspektivischen Ansicht und
Figur 11 ein mit dem Batteriemodulgehäuse verbundenes Deckelelement.

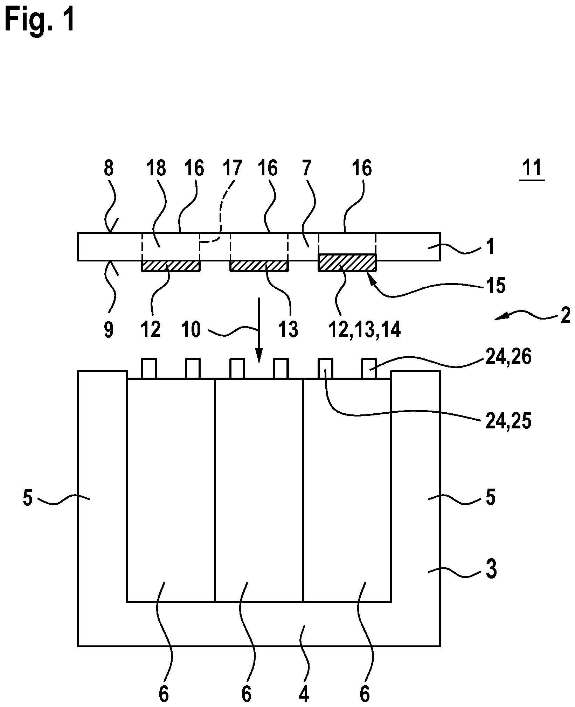

Die Figur 1 zeigt schematisch eine Darstellung eines erfindungsgemäßen Batteriemoduls mit einem Deckelelement 1 eines Batteriemodulgehäuses 2.

Das Batteriemodulgehäuse 2 weist neben dem Deckelelement 1 ein Gehäuse 3 auf. Das Gehäuse 3 weist im Wesentlichen einen Gehäuseboden 4 und eine Mehrzahl an Seitenwänden 5 auf. Die Figur 1 zeigt zudem das Batteriemodulgehäuse 2 in einer Seitenansicht, wobei die vordere Seitenwand 5 nicht gezeigt ist, um das Innere des Gehäuses 3 erkennen zu können.

Das Batteriemodulgehäuse 2 ist zur Aufnahme einer Mehrzahl von Batteriezellen 6 eingerichtet. In der Figur 1 ist gezeigt, dass drei Batteriezellen 6 in dem Batteriemodulgehäuse 2, insbesondere in dem Gehäuse 3, aufgenommen sind. Da anhand der Figur 1 nur schematisch ein Deckelelement 1 beschrieben werden soll, ist es selbstverständlich, dass die dort gezeigte Ausbildung des Gehäuses 3 und die Anzahl der Batteriezellen 6 nicht als einschränkend für die Erfindung anzusehen sind. Die Batteriezellen 6 weisen jeweils einen Spannungsabgriff 24 auf, insbesondere einen positiven Spannungsabgriff 25 und einen negativen Spannungsabgriff 26.

Wie in der Figur 1 gezeigt, weist das Deckelelement 1 eine Gehäusewand 7 auf. Die Gehäusewand 7 weist dabei eine erste Oberfläche 8 und eine zweite Oberfläche 9 auf. Weiterhin ist in der Figur 1 gezeigt, dass die zweite Oberfläche 9 an einer der ersten Oberfläche 8 gegenüberliegenden Seite der Gehäusewand 7 angeordnet ist. Dabei gilt Umgekehrtes selbstverständlich auch.

Zur Verbindung des Deckelelements 1 mit dem Gehäuse 3 wird das Deckelelement 1 in der gezeigten Richtung 10 verschoben, ohne das Deckelelement 1 zu drehen. Dadurch ist erste Oberfläche 8 benachbart zu einer Umgebung 11 des Batteriemodulgehäuses 2 angeordnet. Weiterhin ist dadurch die zweite Oberfläche 9 benachbart zu den Batteriezellen 6 des Batteriemoduls angeordnet.

Mit der zweiten Oberfläche 9 ist insbesondere zumindest ein elektrisches Element 12 verbunden. Weiterhin ist insbesondere zumindest ein elektronisches Element 13 mit der zweiten Oberfläche 9 verbunden. Weiterhin ist es auch möglich, dass das zumindest eine elektrische Element 12 oder das zumindest eine elektronische Element 13, wie bei Bezugszeichen 14 gezeigt, in die Gehäusewand 7 integriert sind. Dabei ist die Integration in der Art ausgebildet, dass die elektrische oder elektronische Komponenten 15 des zumindest einen elektrischen Elements 12 oder des zumindest einen elektronischen Elements 13, welche mit dem Bezugszeichen 15 verdeutlicht werden soll, an der zweiten Oberfläche 9 angeordnet sind.

Das zumindest eine elektrische Element 12 oder das zumindest eine elektronische Element 13 bedecken die zweite Oberfläche 9, wie aus Figur 1 ersichtlich ist, zumindest bereichsweise. Diesem so bedeckten Bereich der zweiten Oberfläche 9 ist zumindest ein Bereich 16 der ersten Oberfläche 8 gegenüberliegenden angeordnet. Die Schnittpunkte der in Figur 1 gezeigten gestrichelten Linien 17 und der Oberfläche 8 sollen die Abgrenzung des Bereiches 16 verdeutlichen. Die Gehäusewand 7 bedeckt in jenen Bereichen 16 der ersten Oberfläche 8 das zumindest eine elektrische Element 12 oder das zumindest eine elektronische Element 13 zur Umgebung 11 hin. Insbesondere das innerhalb der gestrichelten Linien 17 und der ersten Oberfläche 8 sowie der zweiten Oberfläche 9 liegende und vom Werkstoff der Gehäusewand 7 zumindest teilweise ausgefüllte Volumen bedeckt das zumindest eine elektrische Element 12 oder das zumindest eine elektronische Element 13 zur Umgebung 11 hin. Die gestrichelte Linie 17 ist dabei senkrecht zur zweiten Oberfläche 9 angeordnet. Weiterhin ist möglich, dass die gestrichelte Linie 17 auch unter einem Winkel zur ersten Oberfläche 9 angeordnet sein kann.

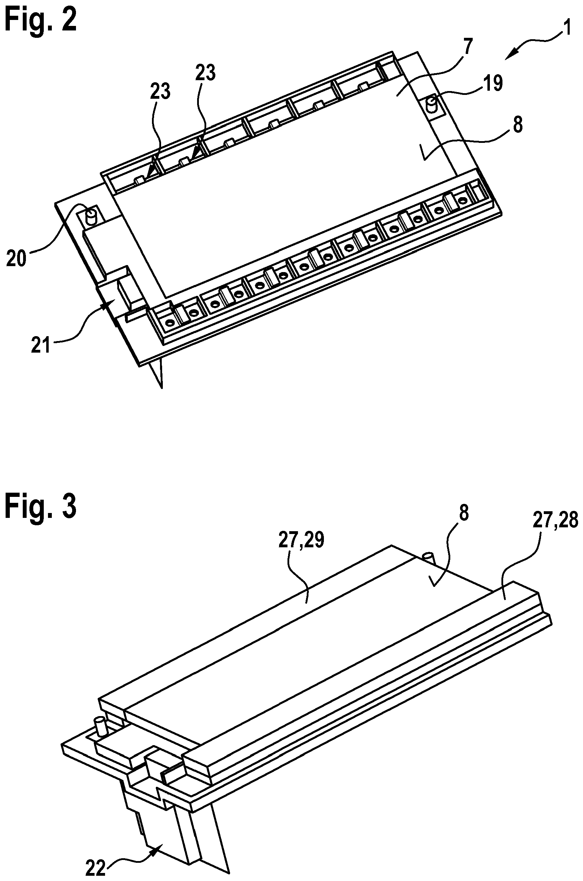

Die Figur 2 zeigt eine Ausführungsform eines Deckelelements 1 in einer perspektivischen Draufsicht, wobei das Gehäuse 3 des Batteriemodulgehäuses 2 samt der darin angeordneten Batteriezellen 6 nicht gezeigt ist.

Dabei ist in Figur 2 die erste Oberfläche 8 zu erkennen. Desweiteren weist das Deckelelement 1 einen an der ersten Oberfläche 8 angeordneten positiven Spannungsabgriff 20 auf. Ferner weist das Deckelelement 1 einen an der ersten Oberfläche 8 angeordneten negativen Spannungsabgriff 19 auf. Der positive Spannungsabgriff 20 und der negative Spannungsabgriff 19 dienen einem Verbraucher dazu, die gesamte von den Battieriezellen 6 erzeugte Spannung, insbesondere die positive bzw. negative Spannung, abzugreifen.

Weiterhin ist aus der Figur 2 zu erkennen, dass das Deckelelement 1 ein Steckelement 21 aufweist, welches als Schnittstelle zum Anschluss des Batteriemoduls an ein hier nicht dargestelltes Fahrzeug dient.

Die Gehäusewand 7 des Deckelelements 1 des Batteriemodulgehäuses 2 weist zumindest eine Öffnung 23 auf. Insbesondere weist das in Figur 2 gezeigte Deckelement 1 beispielsweise dreizehn Öffnungen 23 auf. Die zumindest eine Öffnung 23 ist zur Aufnahme eines Spannungsabgriffs 24 ausgebildet. Insbesondere ist die Öffnung 23 zur Aufnahme eines positiven Spannungsabgriffs 25 und eines negativen Spannungsabgriffs 26 ausgebildet. Der zumindest eine Spannungsabgriff 24, 25, 26 kann mit einem Zellverbinder 34 verbunden werden, was später noch beschrieben ist.

Die Figur 3 zeigt eine Ausführungsform eines Deckelelements 1 mit einem Abdeckelement 27 in einer perspektivischen Draufsicht.

Dabei entspricht das in Figur 3 gezeigte Deckelelement 1 dem in Figur 2 gezeigten Deckelelement 1, wobei der einzige Unterschied darin besteht, dass ein Abdeckelement 27 die zumindest eine Öffnung 23 auf Seiten der ersten Oberfläche 8 verschließt. Insbesondere verschließt ein erstes Abdeckelement 28 sieben Öffnungen 23, wie aus dem Vergleich von Figur 2 und 3 zu erkennen ist. Insbesondere verschließt ein zweites Abdeckelement 29 sechs Öffnungen 23, wie aus dem Vergleich von Figur 2 und 3 zu erkennen ist. Das zumindest eine Abdeckelement 27, 28, 29 ist dabei aus einem elektrisch isolierenden Werkstoff ausgebildet oder weist einen elektrisch isolierenden Werkstoff auf.

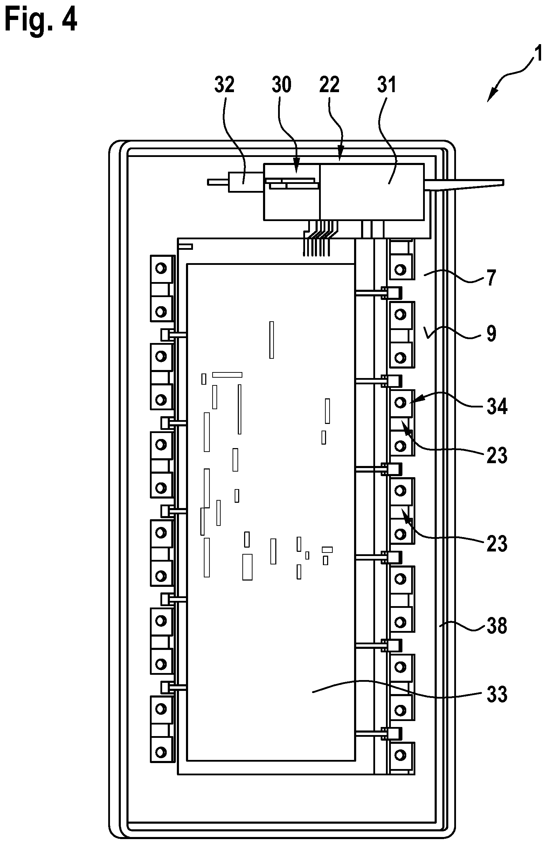

Ferner wurde die Darstellung des Deckelelements in Figur 3 im Vergleich zu Figur 2 gedreht, so dass aus der Figur 3 zu erkennen ist, dass das Deckelelement 1 ein Kontrollelement 22 aufweist. Dabei weist das Kontrollelement 22 eine Sicherung 30 und ein Relais 31 auf, wobei deren Ausbildung im Folgenden bei der Beschreibung von Figur 4 beschrieben ist.

Die Figur 4 zeigt eine Ausführungsform eines Deckelelements 1 in einer perspektivischen Darstellung von unten.

Dadurch ist in Figur 4 im Unterschied zu den Figuren 2 und 3 die zweite Oberfläche 9 der Gehäusewand 7 zu erkennen. An der zweiten Oberfläche 9 der Gehäusewand 7 sind elektrische Elemente 12 und elektronische Elemente 13 angeordnet, auf die Folgenden detaillierten eingegangen werden soll.

Das Deckelelement 1 weist, wie bereits aus Figur 3 ersichtlich ist, ein Kontrollelement 22 auf. Das Kontrollelement 22 weist eine Sicherung 30 und ein Relais 31 auf. Das Relais 31 ist dabei insbesondere reversibel mit dem Deckelelement 1 verbunden, beispielsweise kann das Relais 31 geklipst mit dem Deckelelement 1 verbunden sein. Desweiteren kann diese Verbindung auch irreversibel ausgeführt sein, sollte kein Austauschen erforderlich sein. Die Sicherung 30 ist bevorzugt geschweißt mit dem Relais 31 verbunden. Weiterhin ist die Sicherung 30 geschweißt mit einer positiven Stromschiene 32 verbunden.

Desweiteren ist eine Leiterplatte 33 mit der zweiten Oberfläche 9 der Gehäusewand 7 des Deckelelements 1 verbunden oder in die Gehäusewand 7 integriert.

Weiterhin ist aus der Figur 4 zu erkennen, dass die Gehäusewand 7 zumindest eine Öffnung 23 aufweist. Insbesondere weist die Gehäusewand 7 des in Figur 4 gezeigten Deckelelements 1 dreizehn Öffnungen 23 auf. Aus dem Vergleich der Figuren 2 und 4 wird deutlich, dass die zumindest eine Öffnung 23 durch die Gehäusewand 7 durchgehend verlaufend ausgebildet ist.

Die Verbindungen zwischen den Stromschienen und dem Relais 31 und zwischen den Stromschienen und der Busbar können bereits in einem Vormontageschritt ausgeführt werden.

Ferner zeigt die Figur 4, dass das Deckelelement 1 eine an der zweiten Oberfläche 9 der Gehäusewand 7 angeordnete Dichtung 38 aufweist. Dabei ist die Dichtung 38 umlaufend an der ersten Oberfläche 9 angeordnet. Dadurch kann die Dichtung einen Innenraum des Batteriemoduls gegenüber der Umgebung 11 abdichten. Dabei kann auf eine Dichtung 38 verzichtet werden, wenn der Innenraum des Batteriemoduls anders abgedichtet werden kann. Beispielsweise kann bei einer geklebten Verbindung des Deckelelements 1 mit dem Gehäuse 3 der Kleber für eine Abdichtung sorgen.

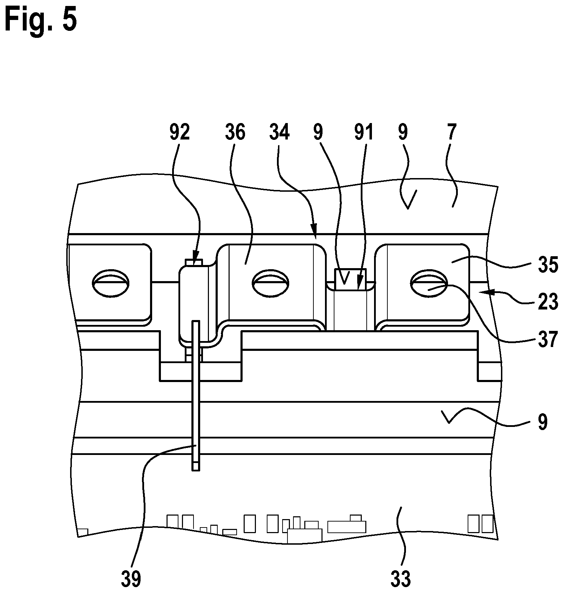

In der zumindest einen Öffnung 23 der Gehäusewand 7 ist, bereits bevor das Deckelelement 1 mit dem Gehäuse 2 verbunden wird, ein Zellverbinder 34 angeordnet. Dabei können die Zellverbinder 34 insbesondere reversibel, wie beispielsweise geklipst ausgebildet, mit dem Deckelelement 1 verbunden sein. Die im Folgenden beschriebene Figur 5 soll die Verbindung des Zellverbinders 34 mit einem Spannungsabgriff 24, 25, 26 verdeutlichen.

Die Figur 5 zeigt einen Ausschnitt eines Deckelelements 1 mit einer Öffnung 23 in einer perspektivischen Ansicht von unten.

Dabei ist in Figur 5 teilweise die Leiterplatte 33 zu erkennen. Weiterhin ist die zweite Oberfläche 9 der Gehäusewand 7 zu erkennen.

Der Zellverbinder 34 ist bereichsweise mit der zweiten Oberfläche 9 der Gehäusewand 7 verbunden, wie die Bezugszeichen 91 und 92 verdeutlichen sollen. Der Zellverbinder 34 weist dabei insbesondere eine erste Seite 35 auf, welche zur Verbindung mit einem positiven Spannungsabgriff 25 einer Batteriezelle 6 eingerichtet ist. Der Zellverbinder 34 weist dabei insbesondere eine zweite Seite 36 auf, welche zur Verbindung mit einem negativen Spannungsabgriff 26 einer Batteriezelle 6 eingerichtet ist.

Insbesondere weisen die erste Seite 35 und/oder die zweite Seite 36 des Zellverbinders 34 jeweils eine Öffnung 37 auf. Dabei ist die Öffnung 37 dazu eingerichtet, einen positiven Spannungsabgriff 25 bzw. einen negativen Spannungsabgriff 26 aufzunehmen. Daher wird bei einer Verbindung des Deckelelements 1 mit dem Gehäuse 2 der zumindest eine Spannungsabgriff 24, insbesondere der positive Spannungsabgriff 25 oder der negative Spannungsabgriff 26 in der Öffnung 23 der Gehäusewand 7 des Deckelelements 1 und der Öffnung 37 der ersten Seite 35 bzw. der zweiten 36 des Zellverbinders 34 aufgenommen. Da die Öffnung 23 der Gehäusewand 7 von der Umgebung 11 des Batteriemodulgehäuses 2 zugänglich ist, kann eine Verbindung, insbesondere durch Laserschweißen, zwischen dem zumindest einen Spannungsabgriff 24, insbesondere des positiven Spannungsabgriffs 25 oder des negativen Spannungsabgriffs 26, und dem Zellverbinder 34, insbesondere der ersten Seite 35 oder der zweiten Seite 36, hergestellt werden. Dann wird vorteilhaft wie in Figur 3 gezeigt die Öffnung 23 zur Umgebung 11 durch ein Abdeckelement 27, 28, 29 verschlossen.

Insbesondere sind auch andere Ausführung des Zellverbinders 34 möglich, welche keine Öffnung 37 aufweisen.

Ferner ist aus der Figur 5 zu erkennen, dass die Leiterplatte 33 und der Zellverbinder 34 durch ein Zellkontaktierungselement 39 verbunden sind. Dabei kann die Verbindung zwischen dem Zellkontaktierungselement 39 und der Leiterplatte 33 sowie zwischen dem Zellkontaktierungselement 39 und dem Zellverbinder 34 beispielsweise über Laserbonden hergestellt werden.

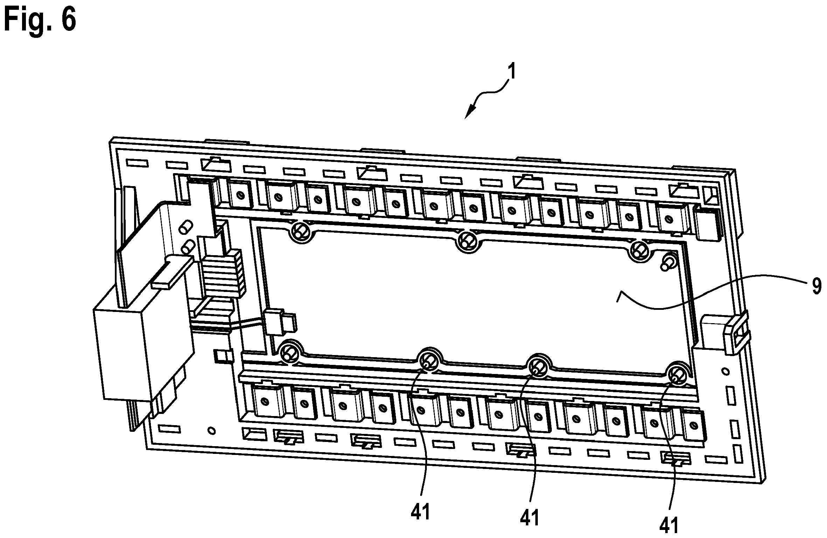

Die Figur 6 zeigt eine weitere Ausführungsform eines Deckelelements 1 in einer perspektivischen Ansicht von unten.

Dabei weist die in der Figur 6 gezeigte weitere Ausführungsform des Deckelelements 1 Positionierelemente 41 auf. Die Positionierelemente 41 sind an der zweiten Oberfläche 9 angeordnet und insbesondere mit der zweiten Oberfläche 9 des Deckelelements 1 verbunden. Die Positionierelement 41 sind zu einer Befestigung des zumindest einen elektrischen Elements 12 oder des zumindest einen elektronischen Elements 13 an der zweiten Oberfläche 9 eingerichtet. Die in der Figur 6 gezeigten Positionierelemente 41 sind bevorzugt zur Befestigung einer elektronischen Leiterplatte eingerichtet.

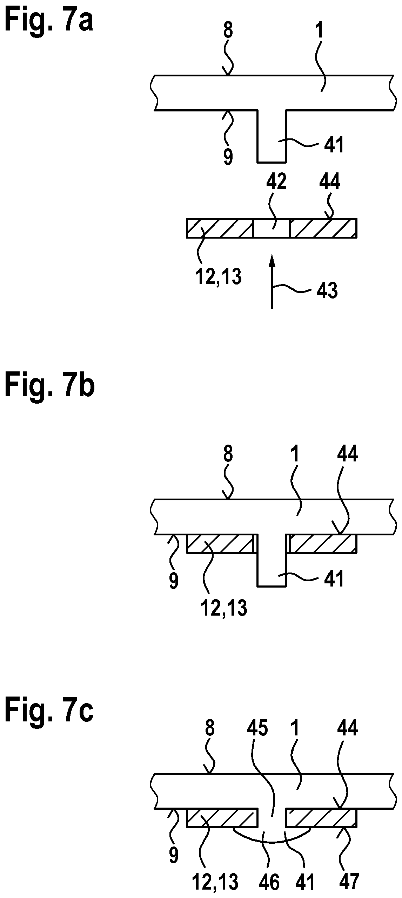

Anhand der Figuren 7a bis 7c soll die Befestigung des zumindest eines elektrischen Elements 12 oder des zumindest einen elektronischen Elements 13 an der zweiten Oberfläche 9 durch Umschmelzung der Positionierelemente 41 beschrieben werden.

Die Figur 7a zeigt einen Ausschnitt eines Querschnittes durch das Deckelelement 1, wobei an der zweiten Oberfläche 9 ein Positionierelement 41 angeordnet ist, wobei das Positionierelement 41 insbesondere mit der zweiten Oberfläche 9 verbunden ist. Das Positionierelement 41 ist dabei in einem noch nicht umgeschmolzenen Zustand gezeigt.

Weiterhin zeigt die Figur 7a das elektrische Element 12 bzw. das elektronische Element 13, welches an der zweiten Oberfläche 9 des Deckelelements 1 befestigt werden soll. Das elektrische Element 12 bzw. das elektronische Element 13 weist eine Öffnung 42 auf, welche derart ausgebildet ist, dass das elektrische Element 12 bzw. das elektronische Element 13 in der gezeigten Richtung 43 in Richtung des Deckelelements 1 geschoben werden kann, soweit bis eine Kontaktfläche 44 des elektrischen Elements 12 bzw. des elektronischen Elements 13 die zweite Oberfläche 9 des Deckelelements 1 zumindest teilweise kontaktiert. Mit anderen Worten ausgedrückt bedeutet dies, dass senkrecht zur gezeigten Richtung 43 angeordnete Querschnittsflächen der Öffnung 42 größer sind, als senkrecht zur gezeigten Richtung 43 angeordnete Querschnittsflächen des Positionierelements 41. Dadurch ist das Positionierelement 41 nach dem Verschieben des elektrischen Elements 12 bzw. des elektronischen Elements 13 zumindest teilweise in der Öffnung 42 verlaufend angeordnet, was in der Figur 7b gezeigt ist. Die Figur 7b zeigt somit die Anordnung unmittelbar vor dem Umschmelzen des Positionierelements 41, nach dem das elektrische Element 12 bzw. das elektronische Element 13 in der gezeigten Richtung 43 in Richtung des Deckelelements 1 verschoben wurde.

Zur Befestigung des elektrischen Elements 12 bzw. des elektronischen Elements 13 wird das Positionierelement 41 auf eine Temperatur, welche über der Schmelztemperatur des Materials des Positionierelements 41 liegt, erwärmt. Dadurch kann das Positionierelement 41 aufgrund der Schwerkraft oder einer manuell aufgebrachten Kraft verformt werden. An dieser Stelle sei angemerkt, dass die Schwerkraft in Richtung der gezeigten Richtung 43 wirkt.

Die Figur 7c zeigt ein an der zweiten Oberfläche 9 des Deckelelements 1 befestigtes elektrisches Element 12 bzw. elektronisches Element 13. Dabei weist das Positionierelement 41 einen ersten Abschnitt 45 auf, welcher in der Öffnung 42 verlaufend angeordnet ist. Der erste Abschnitt 45 ist dabei auch mit der zweiten Oberfläche 9 des Deckelelements 1 verbunden. Weiterhin weist das Positionierelement 41 einen zweiten Abschnitt 46 auf, welcher außerhalb der Öffnung 42 angeordnet ist und mit dem ersten Abschnitt 45 verbunden ist. Der zweite Abschnitt 46 kontaktiert dabei zumindest teilweise eine Oberfläche 47 des elektrischen Elements 12 bzw. des elektronischen Elements 13, wobei die Oberfläche 47 bevorzugt an einer der Kontaktfläche 44 gegenüberliegenden Seite des elektrischen Elements 12 bzw. des elektronischen Elements 13 angeordnet ist. Mit anderen Worten ausgedrückt bedeutet dies, dass die Querschnittsfläche des Positionierelements 41 senkrecht zu der gezeigten Richtung 43 in der Ebene der Kontaktfläche 47 größer ist als die Querschnittsfläche der Öffnung 42, wodurch das elektrische Element 12 bzw. das elektronische Element 13 an der zweiten Oberfläche 9 befestigt ist.

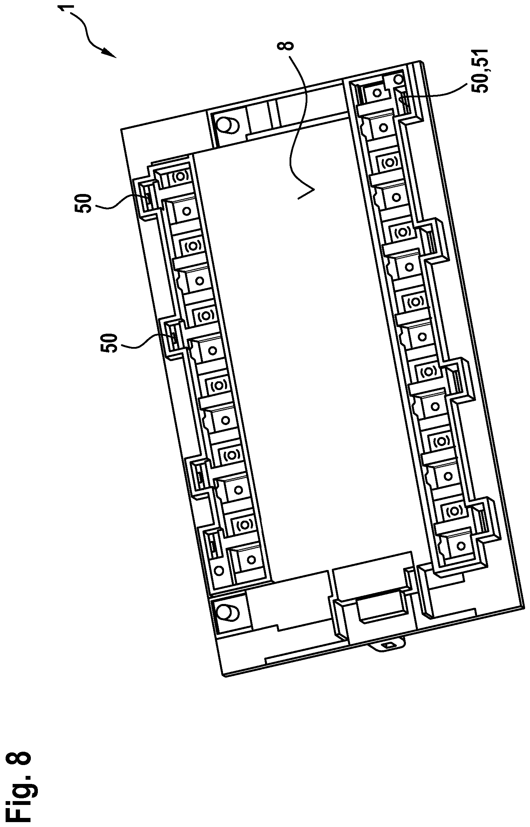

Die Figur 8 zeigt eine Ausführungsform eines Deckelelements 1 in einer perspektivischen Draufsicht, wobei das in der Figur 8 gezeigte Deckelelement 1 Befestigungsmittel 50 aufweist.

Die Befestigungsmittel 50 sind dabei als Öffnungen 51 ausgebildet und sind dazu eingerichtet, das Deckelelement 1 mit einem Batteriemodulgehäuse 2 zu verbinden.

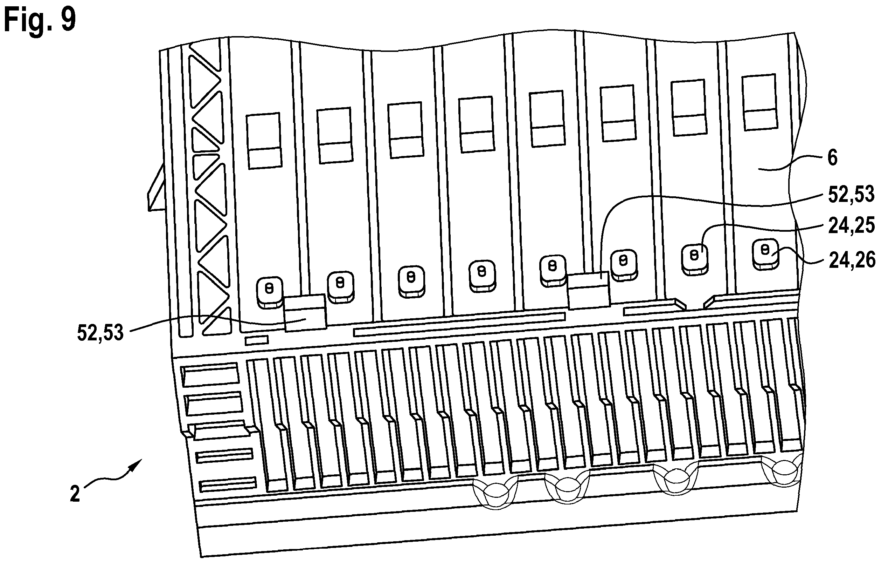

Die Figur 9 zeigt ein Batteriemodulgehäuse 2, in welchem eine Mehrzahl an Batteriezellen 6 aufgenommen ist. Die Batteriezellen 6 weisen jeweils einen Spannungsabgriff 24 auf, insbesondere einen positiven Spannungsabgriff 25 und einen negativen Spannungsabgriff 26. Weiterhin weist das der Figur 9 gezeigte Batteriemodulgehäuse 2 Befestigungsmittel 52 auf. Die Befestigungsmittel 52 des Batteriemodulgehäuses 2 sind dabei als Rastelemente 53 ausgebildet.

Zur reversiblen Verbindung des in der Figur 8 gezeigten Deckelelements 1 mit dem in der Figur 9 gezeigten Batteriemodulgehäuse 2 werden die Befestigungsmittel 50 des Deckelelements 1 mit den Befestigungsmittel 52 des Batteriemodulgehäuses 2 verbunden. Dabei greifen insbesondere die Rastelemente 53 in die Öffnungen 51 ein, sodass die Rastelemente 53 ein Abheben des Deckelelements 1, also ein Verschieben in senkrechter Richtung zu der ersten Oberfläche 8 verhindern können. Darunter soll verstanden sein, dass die Rastelemente 53 einen ersten Abschnitt und einen zweiten Abschnitt aufweisen. Der erste Abschnitt ist mit dem Batteriemodulgehäuse 2 verbunden und zumindest teilweise in der Öffnung 51 des Deckelelements 1 verlaufend angeordnet. Der zweite Abschnitt des Rastelements 53 ist außerhalb der Öffnung 51 angeordnet und weist einen Vorsprung auf, wobei der Vorsprung zumindest teilweise die erste Oberfläche 8 des Deckelelements 1 kontaktiert. Bevorzugt ist die reversible Verbindung in der Art ausgebildet, dass die Rastelemente 53 in die Öffnungen 51 eingeklipst oder eingerastet werden können. Darunter soll verstanden sein, dass die Rastelemente 53 während der Verbindung zum Eingreifen in die Öffnung temporär verformt werden können und danach in ihre ursprüngliche Form zurückkehren.

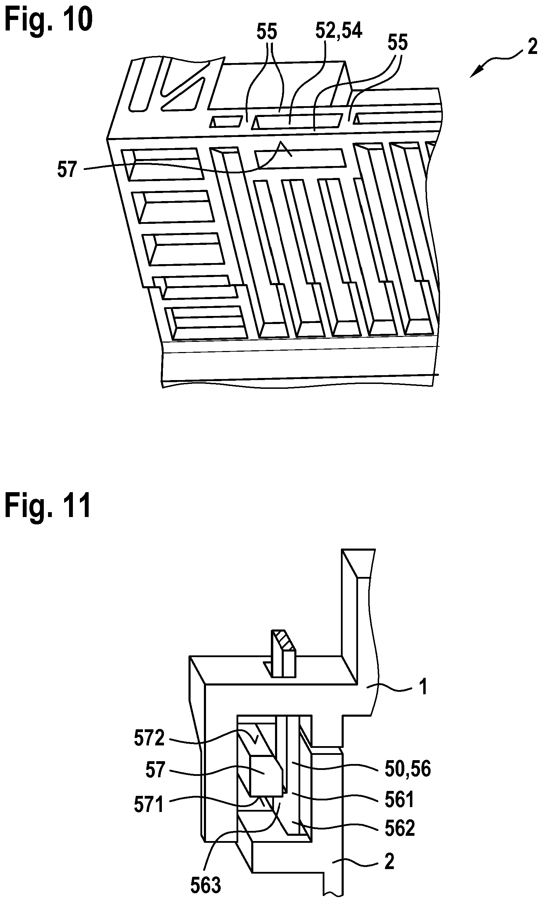

Die Figur 10 zeigt eine weitere Ausführungsform des Batteriemodulgehäuses 2 mit einem Befestigungsmittel 52, wobei bei dem in der Figur 10 gezeigten Ausführungsbeispiel das Befestigungsmittel 52 des Batteriemodulgehäuses 2 im Unterschied zu dem in der Figur 9 gezeigten Ausführungsbeispiel als Öffnung 54 ausgebildet ist. Die Öffnung 54 wird dabei von vier Gehäusewand 55 begrenzt.

Die Figur 11 zeigt eine Schnittansicht durch ein Deckelelement 1 und ein Batteriemodulgehäuse 2 gemäß der Figur 10, welche miteinander verbunden sind. Dabei weist das Deckelelement 1 ein Befestigungsmittel 50 auf, welches als Rastelement 56 ausgebildet ist. Das Rastelement 56 weist einen ersten Abschnitt 561 auf, welcher mit dem Deckelelement 1, insbesondere der zweiten Oberfläche 9, verbunden ist und zumindest teilweise in der Öffnung 54 des Batteriemodulgehäuses 2 verlaufend angeordnet ist. Weiterhin weist das Rastelement 56 einen zweiten Abschnitt 562 auf, welcher außerhalb der Öffnung 54 angeordnet ist und einen Vorsprung 563. Dabei kontaktiert der Vorsprung 563 zumindest teilweise eine Oberfläche 571 einer der Gehäusewände 55, welche die Öffnung 54 ausbilden. Die eine der Gehäusewände 55, welche die von dem Vorsprung 563 zumindest teilweise kontaktierte Oberfläche 571 aufweist, ist in den Figuren 10 und 11 jeweils mit dem Bezugszeichen 57 bezeichnet.

Bevorzugt ist die Oberfläche 571 gegenüberliegend zu einer Oberfläche 572 angeordnet, welche dem Deckelelement 1 zugewandt ist.

## Patentansprüche

1. Batteriemodul mit einem Batteriemodulgehäuse (2), in welchem eine Mehrzahl von Batteriezellen (6) aufgenommen ist, umfassend
ein Deckelelement (1) des Batteriemodulgehäuses (2), wobei das Deckelelement (1) eine Gehäusewand (7) mit einer ersten Oberfläche (8) und einer an einer der ersten Oberfläche (8) gegenüberliegenden Seite derselben Gehäusewand (7) angeordneten zweiten Oberfläche (9) aufweist, und das Deckelelement (1) des Batteriemodulgehäuses (2) in der Art ausgebildet ist, dass die erste Oberfläche (8) benachbart zu einer Umgebung (11) des Batteriemodulgehäuses (2) angeordnet ist und die zweite Oberfläche (9) benachbart zu in einem Gehäuse (3) des Batteriemodulgehäuses (2) aufgenommenen Batteriezellen (6) des Batteriemoduls angeordnet ist, wobei
das Gehäuse (3) des Batteriemodulgehäuses (2) einen Gehäuseboden (4) und eine Mehrzahl an Seitenwänden (5) umfasst, und das Deckelelement (1) das Gehäuse (3) in der Art verschließt, dass die Mehrzahl an Batteriezellen (6) elektrisch seriell und/oder parallel miteinander verbunden sind, wobei zumindest ein elektrisches Element (12) und zumindest ein elektronisches Element (13) mit der zweiten Oberfläche (9) mechanisch verbunden ist und/oder zumindest ein elektrisches Element (12) und elektronisches Element (13) derart in die Gehäusewand (7) des Deckelelements (1) integriert ist, dass deren elektrische oder elektronische Komponenten (15) an der zweiten Oberfläche (9) angeordnet sind, wobei
das zumindest eine elektrische Element (12) Zellverbinder (34) umfasst und
das zumindest eine elektronische Element (13) eine Leiterplatte (33) umfasst, wobei
die Zellverbinder (34) und die Leiterplatte (33) mittels eines Zellkontaktierungselements (39) miteinander verbunden sind, und
die Gehäusewand (7) in jenen Bereichen (16) der ersten Oberfläche (8), welche den von dem zumindest einen elektrischen Element (12) oder dem zumindest einen elektronischen Element (13) bedeckten Bereichen der zweiten Oberfläche (9) gegenüberliegend angeordnet sind, das zumindest eine elektrische Element (12) oder elektronische Element (13) zur Umgebung (11) hin bedeckt.

2. Batteriemodul nach Anspruch 1, **dadurch gekennzeichnet, dass** das zumindest eine elektrische Element (12) weiterhin eine Stromsammelschiene (32) umfasst und das elektronische Element (13) weiterhin ein Relais (31) und eine Sicherung (30) umfasst.

3. Batteriemodul nach einem der vorhergehenden Ansprüche, **dadurch gekennzeichnet, dass** das Deckelelement (1) zumindest einen an der ersten Oberfläche (8) angeordneten Spannungsabgriff (19, 20), insbesondere einen positiven Spannungsabgriff (20) und einen negativen Spannungsabgriff (19), aufweist.

4. Batteriemodul nach einem der vorhergehenden Ansprüche, wobei die Gehäusewand (7) zumindest eine Öffnung (23) aufweist, welche zur Aufnahme eines Spannungsabgriffs (24, 25, 26) einer Batteriezelle (6) des Batteriemoduls eingerichtet ist, **dadurch gekennzeichnet, dass** die zumindest eine Öffnung (23) auf Seiten der ersten Oberfläche (8) durch ein Abdeckelement (27, 28, 29) verschließbar ist, welches insbesondere aus einem elektrisch isolierenden Werkstoff ausgebildet ist oder einen elektrisch isolierenden Werkstoff aufweist.

5. Batteriemodul nach einem der vorhergehenden Ansprüche, **dadurch gekennzeichnet, dass** das Deckelelement (1) eine umlaufend an dem Deckelelement (1) angeordnete Dichtung (38) aufweist und das Deckelelement (1) in der Art reversibel oder irreversibel mit einem Gehäuse (2) des Batteriemoduls verbindbar ist, dass in einem montierten Zustand die Dichtung (38) einen die Batteriezellen (6) aufnehmenden Innenraum gegenüber der Umgebung (11) des Batteriemoduls abdichtet.

6. Batteriemodul nach einem der vorhergehenden Ansprüche, **dadurch gekennzeichnet, dass** mit der zweiten Oberfläche (9) weiterhin ein Positionierelement (41) verbunden ist, welches zur Verbindung des zumindest einen elektrischen Elements (12) oder des zumindest einen elektronischen Elements (13) an der zweiten Oberfläche (9) durch Umschmelzung des Materials des Positionierelements (41) ausgebildet ist.

7. Batteriemodul nach einem der vorhergehenden Ansprüche, wobei das Deckelelement (1) zumindest ein zur Befestigung des Deckelelements (1) an dem Batteriemodulgehäuse (2) eingerichtetes Befestigungsmittel (50), insbesondere eine Öffnung (51), einen Vorsprung (563) oder ein Rastelement (56), aufweist, **dadurch gekennzeichnet, dass** das Befestigungsmittel (50) mit dem Gehäuse (3) des Batteriemodulgehäuses (2) verbunden ist.

8. Verfahren zur Herstellung eines Batteriemoduls nach einem der Ansprüche 1 bis 7, wobei
in einem ersten Schritt Batteriezellen (6) in einem Gehäuse (3) eines Batteriemodulgehäuses (2) angeordnet werden, wobei
das Gehäuse (3) des Batteriemodulgehäuses (2) einen Gehäuseboden (4) und eine Mehrzahl an Seitenwänden (5) umfasst und
in einem zweiten Schritt das Gehäuse (3) mit einem Deckelelement (1) des Batteriemodulgehäuses (2) derart verschlossen wird, dass die Batteriezellen (6) elektrisch seriell und/oder parallel miteinander verschaltet sind, wobei das Deckelelement (1) eine Gehäusewand (7) mit einer ersten Oberfläche (8) und einer an einer der ersten Oberfläche (8) gegenüberliegenden Seite derselben Gehäusewand (7) angeordneten zweiten Oberfläche (9) aufweist, und das Deckelelement (1) des Batteriemodulgehäuses (2) in der Art angeordnet wird, dass die erste Oberfläche (8) benachbart zu einer Umgebung (11) des Batteriemodulgehäuses (2) angeordnet ist und die zweite Oberfläche (9) benachbart zu in einem Gehäuse (3) des Batteriemoduls aufgenommenen Batteriezellen (6) des Batteriemoduls angeordnet ist, wobei
zumindest ein elektrisches Element (12) und zumindest ein elektronisches Element (13) mit der zweiten Oberfläche (9) mechanisch verbunden ist und/oder zumindest ein elektrisches Element (12) und elektronisches Element (13) derart in die Gehäusewand (7) des Deckelelements (1) integriert ist, dass deren elektrische oder elektronische Komponenten (15) an der zweiten Oberfläche (9) angeordnet sind, wobei
das zumindest eine elektrische Element (12) Zellverbinder (34) umfasst und das zumindest eine elektronische Element (13) eine Leiterplatte (33) ist, wobei die Zellverbinder (34) und die Leiterplatte (33) mittels eines Zellkontaktierungselements (39) miteinander verbunden sind, und
die Gehäusewand (7) in jenen Bereichen (16) der ersten Oberfläche (8), welche den von dem zumindest einen elektrischen Element (12) oder dem zumindest einen elektronischen Element (13) bedeckten Bereichen der zweiten Oberfläche (9) gegenüberliegend angeordnet sind, das zumindest eine elektrische Element (12) oder elektronische Element (13) zur Umgebung (11) hin bedeckt.

9. Batterie mit einem Batteriemodul nach einem der Ansprüche 1 bis 7.

## Claims

1. Battery module comprising a battery module housing (2) in which a plurality of battery cells (6) are accommodated, comprising
a cover element (1) of the battery module housing (2), wherein the cover element (1) has a housing wall (7) with a first surface (8) and a second surface (9) arranged on a side of the same housing wall (7) that is situated opposite the first surface (8), and the cover element (1) of the battery module housing (2) is formed in such a way that the first surface (8) is arranged adjacent to the surroundings (11) of the battery module housing (2) and the second surface (9) is arranged adjacent to battery cells (6) of the battery module accommodated in a housing (3) of the battery module housing (2), wherein
the housing (3) of the battery module housing (2) comprises a housing base (4) and a plurality of side walls (5), and the cover element (1) closes the housing (3) in such a way that the plurality of battery cells (6) are electrically connected to each other in series and/or in parallel, wherein
at least one electrical element (12) and at least one electronic element (13) are mechanically connected to the second surface (9) and/or at least one electrical element (12) and electronic element (13) are integrated into the housing wall (7) of the cover element (1) in such a way that their electrical or electronic components (15) are arranged on the second surface (9), wherein the at least one electrical element (12) comprises cell connectors (34) and the at least one electronic element (13) comprises a printed circuit board (33), wherein
the cell connectors (34) and the printed circuit board (33) are connected to each other by means of a cell contacting element (39), and
the housing wall (7), in those regions (16) of the first surface (8) which are arranged situated opposite the regions of the second surface (9) that are covered by the at least one electrical element (12) or the at least one electronic element (13), covers the at least one electrical element (12) or electronic element (13) with respect to the surroundings (11).

2. Battery module according to Claim 1, **characterized in that** the at least one electrical element (12) further comprises a busbar (32) and the electronic element (13) further comprises a relay (31) and a fuse (30).

3. Battery module according to either of the preceding claims, **characterized in that** the cover element (1) has at least one voltage tap (19, 20) arranged on the first surface (8), in particular a positive voltage tap (20) and a negative voltage tap (19).

4. Battery module according to any of the preceding claims, wherein the housing wall (7) has at least one opening (23), which is designed for receiving a voltage tap (24, 25, 26) of a battery cell (6) of the battery module, **characterized in that** the at least one opening (23), on the side of the first surface (8), can be closed by a covering element (27, 28, 29) which is formed, in particular, from an electrically insulating material or contains an electrically insulating material.

5. Battery module according to any of the preceding claims, **characterized in that** the cover element (1) has a seal (38) arranged circumferentially on the cover element (1) and the cover element (1) can be reversibly or irreversibly connected to a housing (2) of the battery module in such a way that, in an assembled state, the seal (38) seals off an interior space accommodating the battery cells (6) from the surroundings (11) of the battery module.

6. Battery module according to any of the preceding claims, **characterized in that** a positioning element (41) is further connected to the second surface (9) and is designed for connecting the at least one electrical element (12) or the at least one electronic element (13) on the second surface (9) by remelting the material of the positioning element (41).

7. Battery module according to any of the preceding claims, wherein the cover element (1) has at least one fastening means (50) designed for fastening the cover element (1) to the battery module housing (2), in particular an opening (51), a projection (563) or a latching element (56), **characterized in that** the fastening means (50) is connected to the housing (3) of the battery module housing (2).

8. Method for producing a battery module according to any of Claims 1 to 7, wherein
in a first step battery cells (6) are arranged in a housing (3) of a battery module housing (2), wherein
the housing (3) of the battery module housing (2) comprises a housing base (4) and a plurality of side walls (5), and
in a second step the housing (3) is closed by way of a cover element (1) of the battery module housing (2) in such a way that the battery cells (6) are electrically interconnected with each other in series and/or in parallel, wherein the cover element (1) has a housing wall (7) with a first surface (8) and a second surface (9) arranged on a side of the same housing wall (7) that is situated opposite the first surface (8), and the cover element (1) of the battery module housing (2) is arranged in such a way that the first surface (8) is arranged adjacent to the surroundings (11) of the battery module housing (2) and the second surface (9) is arranged adjacent to battery cells (6) of the battery module accommodated in a housing (3) of the battery module, wherein at least one electrical element (12) and at least one electronic element (13) are mechanically connected to the second surface (9) and/or at least one electrical element (12) and electronic element (13) are integrated into the housing wall (7) of the cover element (1) in such a way that their electrical or electronic components (15) are arranged on the second surface (9), wherein the at least one electrical element (12) comprises cell connectors (34) and the at least one electronic element (13) is a printed circuit board (33), wherein the cell connectors (34) and the printed circuit board (33) are connected to each other by means of a cell contacting element (39), and
the housing wall (7), in those regions (16) of the first surface (8) which are arranged situated opposite the regions of the second surface (9) that are covered by the at least one electrical element (12) or the at least one electronic element (13), covers the at least one electrical element (12) or electronic element (13) with respect to the surroundings (11).

9. Battery comprising a battery module according to any of Claims 1 to 7.

## Revendications

1. Module de batterie, comprenant un boîtier de module de batterie (2) dans lequel sont logées une pluralité de cellules de batterie (6), comprenant un élément formant couvercle (1) du boîtier de module de batterie (2),
l'élément formant couvercle (1) comprenant une paroi de boîtier (7) avec une première surface (8) et une deuxième surface (9) disposée sur un côté de la même paroi de boîtier (7) opposé à la première surface (8), et l'élément formant couvercle (1) du boîtier de module de batterie (2) étant configuré de telle sorte que la première surface (8) est disposée de manière adjacente à un environnement (11) du boîtier de module de batterie (2) et que la deuxième surface (9) est disposée de manière adjacente à des cellules de batterie (6) du module de batterie logées dans un boîtier (3) du boîtier de module de batterie (2),
le boîtier (3) du boîtier de module de batterie (2) comprenant un fond de boîtier (4) et une pluralité de parois latérales (5), et l'élément formant couvercle (1) fermant le boîtier (3) de telle sorte que la pluralité de cellules de batterie (6) sont connectées électriquement les unes aux autres en série et/ou en parallèle,
au moins un élément électrique (12) et au moins un élément électronique (13) étant reliés mécaniquement à la deuxième surface (9) et/ou au moins un élément électrique (12) et un élément électronique (13) étant intégrés dans la paroi de boîtier (7) de l'élément formant couvercle (1) de telle sorte que leurs composants (15) électriques ou électroniques sont disposés sur la deuxième surface (9),
l'au moins un élément électrique (12) comprenant des connecteurs de cellule (34) et
ledit au moins un élément électronique (13) comprenant une carte à circuit imprimé (33),
les connecteurs de cellule (34) et la carte à circuit imprimé (33) étant connectés entre eux au moyen d'un élément de mise en contact de cellule (39), et la paroi de boîtier (7), dans les zones (16) de la première surface (8) qui sont disposées à l'opposé des zones de la deuxième surface (9) qui sont recouvertes par l'au moins un élément électrique (12) ou l'au moins un élément électronique (13), recouvrant l'au moins un élément électrique (12) ou élément électronique (13) par rapport à l'environnement (11).

2. Module de batterie selon la revendication 1, **caractérisé en ce que** l'au moins un élément électrique (12) comprend en outre une barre omnibus électrique (32) et l'élément électronique (13) comprend en outre un relais (31) et un fusible (30).

3. Module de batterie selon l'une des revendications précédentes, **caractérisé en ce que** l'élément formant couvercle (1) possède au moins une prise de tension (19, 20) disposée sur la première surface (8), notamment une prise de tension positive (20) et une prise de tension négative (19).

4. Module de batterie selon l'une des revendications précédentes, la paroi de boîtier (7) possédant au moins une ouverture (23), laquelle est conçue pour recevoir une prise de tension (24, 25, 26) d'une cellule de batterie (6) du module de batterie, **caractérisé en ce que** l'au moins une ouverture (23) peut être fermée du côté de la première surface (8) par un élément de recouvrement (27, 28, 29), lequel est notamment réalisé dans un matériau électriquement isolant ou présente un matériau électriquement isolant.

5. Module de batterie selon l'une des revendications précédentes, **caractérisé en ce que** l'élément formant couvercle (1) possède un joint d'étanchéité (38) disposé de manière périphérique sur l'élément formant couvercle (1) et l'élément formant couvercle (1) peut être relié de manière réversible ou irréversible à un boîtier (2) du module de batterie de telle sorte que, dans un état monté, le joint d'étanchéité (38) réalise l'étanchéité d'un espace intérieur recevant les cellules de batterie (6) par rapport à l'environnement (11) du module de batterie.

6. Module de batterie selon l'une des revendications précédentes, **caractérisé en ce qu'**un élément de positionnement (41) est en outre relié à la deuxième surface (9), lequel est configuré pour relier l'au moins un élément électrique (12) ou l'au moins un élément électronique (13) à la deuxième surface (9) par refusion du matériau de l'élément de positionnement (41).

7. Module de batterie selon l'une des revendications précédentes, l'élément formant couvercle (1) possédant au moins un moyen de fixation (50) conçu pour la fixation de l'élément formant couvercle (1) au boîtier de module de batterie (2), notamment une ouverture (51), une partie saillante (563) ou un élément d'encliquetage (56), **caractérisé en ce que** le moyen de fixation (50) est relié au boîtier (3) du boîtier de module de batterie (2).

8. Procédé de fabrication d'un module de batterie selon l'une des revendications 1 à 7,
dans une première étape, des cellules de batterie (6) étant disposées dans un boîtier (3) d'un boîtier de module de batterie (2),
le boîtier (3) du boîtier de module de batterie (2) comprend un fond de boîtier (4) et une pluralité de parois latérales (5) et
dans une deuxième étape, le boîtier (3) étant fermé par un élément formant couvercle (1) du boîtier de module de batterie (2) de telle sorte que les cellules de batterie (6) sont connectées électriquement en série et/ou en parallèle entre elles, l'élément formant couvercle (1) comprenant une paroi de boîtier (7) avec une première surface (8) et une deuxième surface (9) disposée sur un côté de la même paroi de boîtier (7) opposé à la première surface (8), et l'élément formant couvercle (1) du boîtier de module de batterie (2) étant disposé de telle sorte que la première surface (8) est disposée de manière adjacente à un environnement (11) du boîtier de module de batterie (2) et que la deuxième surface (9) est disposée de manière adjacente à des cellules de batterie (6) du module de batterie logées dans un boîtier (3) du boîtier de module de batterie (2),
au moins un élément électrique (12) et au moins un élément électronique (13) étant reliés mécaniquement à la deuxième surface (9) et/ou au moins un élément électrique (12) et un élément électronique (13) étant intégrés dans la paroi de boîtier (7) de l'élément formant couvercle (1) de telle sorte que leurs composants (15) électriques ou électroniques sont disposés sur la deuxième surface (9),
ledit au moins un élément électrique (12) comprenant des connecteurs de cellule (34) et l'au moins un élément électronique (13) étant une carte à circuit imprimé (33), les connecteurs de cellule (34) et la carte à circuit imprimé (33) étant connectés entre eux au moyen d'un élément de mise en contact de cellule (39), et
la paroi de boîtier (7), dans les zones (16) de la première surface (8) qui sont disposées à l'opposé des zones de la deuxième surface (9) qui sont recouvertes par l'au moins un élément électrique (12) ou l'au moins un élément électronique (13), recouvrant l'au moins un élément électrique (12) ou élément électronique (13) par rapport à l'environnement (11).

9. Batterie comprenant un module de batterie selon l'une des revendications 1 à 7.
